# EUROPÄISCHE PATENTSCHRIFT

(11) **EP 2 503 127 B1**
(45) Veröffentlichungstag und Bekanntmachung des Hinweises auf die Patenterteilung: **24.09.2014**
(21) Anmeldenummer: 11159786.0
(22) Anmeldetag: 25.03.2011
(51) Int. Cl.: F02B 37/007, F02B 37/02, F01L 13/00, F02F 1/24, F02D 13/02, F01L 1/26, F01L 1/34, F02D 23/02

(54) **Aufgeladene Brennkraftmaschine und Verfahren zum Betreiben einer derartigen Brennkraftmaschine**
Charged internal combustion engine and method to operate such an engine
Moteur à combustion interne chargé et procédé de fonctionnement d'un tel moteur à combustion interne

(43) Veröffentlichungstag der Anmeldung: 26.09.2012
(73) Patentinhaber: Ford Global Technologies, LLC, Dearborn, MI 48126 (US)
(72) Erfinder: Bartsch, Guenther, 51645 Gummersbach (DE); Friedfeldt, Rainer, 50354 Hürth (DE); Kuhlbach, Kai, 51427 Bergisch Gladbach (DE); Schorn, Norbert, 52080 Aachen (DE)
(74) Vertreter: Drömer, Hans-Carsten

(56) Entgegenhaltungen:
- EP-A1- 1 645 735
- EP-A1- 2 246 543
- DE-A1-102005 054 249
- JP-A- 62 174 537

## Beschreibung

Die Erfindung betrifft eine aufgeladene Brennkraftmaschine mit mindestens zwei Abgasturboladern und mindestens einem an einer Montage-Stirnseite mit einem Zylinderblock verbindbaren Zylinderkopf mit mindestens zwei Zylindern, wobei jeder Zylinder mindestens zwei Auslaßöffnungen zum Abführen der Abgase aufweist, von denen mindestens eine als zuschaltbare Auslaßöffnung ausgebildet ist, und sich an jede Auslaßöffnung eine Abgasleitung anschließt, bei der
- die Abgasleitungen der zuschaltbaren Auslaßöffnungen von mindestens zwei Zylindern unter Ausbildung eines ersten Abgaskrümmers zu einer ersten Gesamtabgasleitung zusammenführen, welche mit der Turbine eines ersten Abgasturboladers verbunden ist, und
- die Abgasleitungen der anderen Auslaßöffnungen der mindestens zwei Zylinder unter Ausbildung eines zweiten Abgaskrümmers zu einer zweiten Gesamtabgasleitung zusammenführen, welche mit der Turbine eines zweiten Abgasturboladers verbunden ist.

Des Weiteren betrifft die Erfindung ein Verfahren zum Betreiben einer derartigen Brennkraftmaschine.

Eine Brennkraftmaschine der eingangs genannten Art offenbart die JP 62 174537 A. Im Rahmen der vorliegenden Erfindung umfaßt der Begriff Brennkraftmaschine insbesondere Ottomotoren, aber auch Dieselmotoren und Hybrid-Brennkraftmaschinen.

Brennkraftmaschinen verfügen über einen Zylinderblock und mindestens einen Zylinderkopf, die zur Ausbildung der Zylinder miteinander verbunden werden. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Häufig dient der Zylinderkopf zur Aufnahme des Ventiltriebs.

Im Rahmen des Ladungswechsels erfolgt das Ausschieben der Verbrennungsgase über die Auslaßöffnungen der Zylinder und das Füllen der Brennräume, d. h. das Ansaugen des Frischgemisches bzw. der Frischluft über die Einlaßöffnungen. Es ist die Aufgabe des Ventiltriebes die Einlaß- und Auslaßöffnungen rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten. Nach dem Stand der Technik werden die Zylinder daher auch häufig mit zwei oder mehr Einlaß- bzw. Auslaßöffnungen ausgestattet. Auch die mindestens zwei Zylinder der Brennkraftmaschine, die Gegenstand der vorliegenden Erfindung ist, sind mit mindestens zwei Auslaßöffnungen ausgestattet.

Die Einlaßkanäle, die zu den Einlaßöffnungen führen, und die Auslaßkanäle, d. h. Abgasleitungen, die sich an die Auslaßöffnungen anschließen, sind nach dem Stand der Technik zumindest teilweise im Zylinderkopf integriert. Die Abgasleitungen der Zylinder werden in der Regel zu einer gemeinsamen Gesamtabgasleitung oder aber - wie bei der erfindungsgemäßen Brennkraftmaschine - gruppenweise zu zwei oder mehreren Gesamtabgasleitungen zusammengeführt. Die Zusammenführung von Abgasleitungen zu einer Gesamtabgasleitung wird im Allgemeinen und im Rahmen der vorliegenden Erfindung als Abgaskrümmer bezeichnet, wobei das Teilstück der Gesamtabgasleitung, welches stromaufwärts einer in der Gesamtabgasleitung angeordneten Turbine liegt, erfindungsgemäß als zum Abgaskrümmer gehörend angesehen wird.

Stromabwärts der Krümmer werden die Abgase vorliegend zwecks Aufladung der Brennkraftmaschine den Turbinen von mindestens zwei Abgasturboladern zugeführt und gegebenenfalls einem oder mehreren Systemen zur Abgasnachbehandlung.

Die Vorteile eines Abgasturboladers beispielsweise im Vergleich zu einem mechanischen Lader bestehen darin, dass keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein Abgasturbolader umfaßt einen Verdichter und eine Turbine, die auf derselben Welle angeordnet sind, wobei der heiße Abgasstrom der Turbine zugeführt wird und sich unter Energieabgabe in dieser Turbine entspannt, wodurch die Welle in Drehung versetzt wird. Aufgrund der hohen Drehzahlen wird die Welle üblicherweise in Gleitlagern aufgenommen. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird. Gegebenenfalls ist eine Ladeluftkühlung vorgesehen, mit der die komprimierte Verbrennungsluft vor Eintritt in die Zylinder gekühlt wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck gesteigert werden. Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist.

Die Auslegung der Abgasturboladung bereitet häufig Schwierigkeiten, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich könnte dem Abfall des Ladedruckes durch eine Verkleinerung des Turbinenquerschnittes und der damit einhergehenden Steigerung des Turbinendruckverhältnisses entgegengewirkt werden. Damit wird der Drehmomentabfall aber nur weiter zu geringeren Drehzahlen hin verschoben. Zudem sind dieser Vorgehensweise, d. h. der Verkleinerung des Turbinenquerschnittes, Grenzen gesetzt, da die gewünschte Aufladung und Leistungssteigerung auch bei hohen Drehzahlen, d. h. großen Abgasmengen, uneingeschränkt möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat den Nachteil, dass das Aufladeverhalten bei höheren Drehzahlen bzw. größeren Abgasmengen unzureichend ist.

Die Drehmomentcharakteristik einer aufgeladenen Brennkraftmaschine kann des Weiteren durch mehrere parallel angeordnete Turbolader, d. h. durch mehrere parallel angeordnete Turbinen von kleinem Turbinenquerschnitt verbessert werden, wobei mit steigender Abgasmenge Turbinen zugeschaltet werden.

Eine aufgeladene Brennkraftmaschine mit mindestens zwei parallel angeordneten Abgasturboladern ist auch Gegenstand der vorliegenden Erfindung, wobei eine Turbine als zuschaltbare Turbine ausgebildet ist, welche nur bei größeren Abgasmengen mit Abgas beaufschlagt, d. h. aktiviert wird.

Dabei ist man bemüht, die Turbinen möglichst nahe am Auslaß, d. h. den Auslaßöffnungen der Zylinder, anzuordnen, um auf diese Weise zum einen die Abgasenthalpie der heißen Abgase, die maßgeblich vom Abgasdruck und der Abgastemperatur bestimmt wird, optimal nutzen zu können und zum anderen ein schnelles Ansprechverhalten der Turbolader zu gewährleisten. In diesem Zusammenhang wird daher grundsätzlich angestrebt, die thermische Trägheit und das Volumen des Leitungssystems zwischen den Auslaßöffnungen an den Zylindern und den Turbinen zu minimieren, was durch Reduzierung der Masse und der Länge der Abgasleitungen erreicht werden kann.

Um die zuvor genannten Ziele zu erreichen, werden die Abgasleitungen von mindestens zwei Zylindern gruppenweise in der Art zusammen geführt, dass von jedem dieser Zylinder mindestens eine Abgasleitung zu der Turbine des ersten Abgasturboladers und mindestens eine Abgasleitung zu der Turbine des zweiten Abgasturboladers führt.

Erfindungsgemäß ist die Turbine des ersten Abgasturboladers, d. h. die erste Turbine, als zuschaltbare Turbine ausgebildet und die Auslaßöffnungen der zu dieser Turbine führenden Abgasleitungen sind - dazu korrespondierend - als zuschaltbare Auslaßöffnungen ausgeführt. Nur bei größeren Abgasmengen werden die zuschaltbaren Auslaßöffnungen im Rahmen des Ladungswechsels geöffnet und dadurch die erste Turbine aktiviert, d. h. mit Abgas beaufschlagt.

Im Vergleich zu Ausführungsformen, bei denen stromaufwärts der beiden Turbinen ein einziges zusammenhängendes Leitungssystem vorgesehen ist, verbessert sich durch die vorstehend beschriebene Gruppierung, d. h. die Verwendung zweier voneinander getrennter Abgaskrümmer, das Betriebsverhalten der Brennkraftmaschine, insbesondere bei kleinen Abgasströmen, da das Leitungsvolumen stromaufwärts der kontinuierlich von Abgas durchströmten zweiten Turbine durch diese Maßnahme verkleinert wird, was bei niedrigen Lasten bzw. Drehzahlen, d. h. geringen Abgasmengen, vorteilhaft ist, insbesondere das Ansprechverhalten verbessert.

Nachteilig an der vorstehend beschriebenen Brennkraftmaschine ist, dass die zuschaltbare Turbine im deaktivierten Zustand von der Abgasströmung vollständig abgeschnitten ist, d. h. der abgeschalteten Turbine keinerlei Abgas zugeführt wird. Dies resultiert aus der Verwendung eines separaten Abgaskrümmers und dem Nichtöffnen der zuschaltbaren Auslaßöffnungen in diesem Betriebszustand, d. h. bei geringen Abgasmengen.

Infolge der fehlenden Abgasanströmung vermindert sich die Drehzahl der zuschaltbaren Turbine bei Deaktivierung deutlich. Der hydrodynamische Schmierfilm baut sich ab bzw. bricht vollständig zusammen, so dass die vormals reine Flüssigkeitsreibung in eine Mischreibung, gegebenenfalls in eine überwiegende Festkörperreibung übergeht. Dies erhöht den Verschleiß, mindert die Dauerhaltbarkeit des Abgasturboladers und ist grundsätzlich kritisch zu sehen im Hinblick auf die Störanfälligkeit des Laders. In diesem Zusammenhang ist zudem zu berücksichtigen, dass auch die deaktivierte Turbine während des Betriebs der Brennkraftmaschine Schwingungen und Stößen ausgesetzt ist, wobei eine Dämpfung der sich relativ zueinander bewegenden Bauteile infolge des fehlenden Schmierfilms ausbleibt.

Des Weiteren muß berücksichtigt werden, dass die zuschaltbare Turbine bei Aktivierung zu beschleunigen ist. Auch wenn das Laufzeug der zuschaltbaren Turbine aufgrund der Größe bzw. des Einsatzes von zwei Turbinen vergleichsweise wenig träge ist, spricht die Turbine bei Aktivierung nur langsam an. Ein vom Fahrer angefordertes Drehmoment kann nur mit Verzögerung bereitgestellt werden.

Vor dem Hintergrund des oben Gesagten ist es eine Aufgabe der vorliegenden Erfindung, eine aufgeladene Brennkraftmaschine gemäß dem Oberbegriff des Anspruchs 1 bereitzustellen, mit der die aus dem Stand der Technik bekannten Probleme bzw. Nachteile überwunden werden und die ein verbessertes Betriebsverhalten bei Aktivierung der zuschaltbaren ersten Turbine aufweist.

Eine weitere Teilaufgabe der vorliegenden Erfindung ist es, ein Verfahren zum Betreiben einer derartigen Brennkraftmaschine aufzuzeigen.

Gelöst wird die erste Teilaufgabe durch eine aufgeladene Brennkraftmaschine mit mindestens zwei Abgasturboladern und mindestens einem an einer Montage-Stirnseite mit einem Zylinderblock verbindbaren Zylinderkopf mit mindestens zwei Zylindern, wobei jeder Zylinder mindestens zwei Auslaßöffnungen zum Abführen der Abgase aufweist, von denen mindestens eine als zuschaltbare Auslaßöffnung ausgebildet ist, und sich an jede Auslaßöffnung eine Abgasleitung anschließt, bei der
- die Abgasleitungen der zuschaltbaren Auslaßöffnungen von mindestens zwei Zylindern unter Ausbildung eines ersten Abgaskrümmers zu einer ersten Gesamtabgasleitung zusammenführen, welche mit der Turbine eines ersten Abgasturboladers verbunden ist, und
- die Abgasleitungen der anderen Auslaßöffnungen der mindestens zwei Zylinder unter Ausbildung eines zweiten Abgaskrümmers zu einer zweiten Gesamtabgasleitung zusammenführen, welche mit der Turbine eines zweiten Abgasturboladers verbunden ist,
und die dadurch gekennzeichnet ist, dass
- der erste Abgaskrümmer und der zweite Abgaskrümmer stromaufwärts der beiden Turbinen via mindestens einen nicht verschließbaren Verbindungskanal dauerhaft miteinander verbunden sind, und
- die Abgasleitungen der mindestens zwei Zylinder innerhalb des Zylinderkopfes zu den zwei Gesamtabgasleitungen zusammenführen, wobei die eine Gesamtabgasleitung auf der der Montage-Stirnseite abgewandten Seite der anderen Gesamtabgasleitung angeordnet ist.

Im Gegensatz zum Stand der Technik, gemäß dem die beiden Abgaskrümmer vollständig voneinander getrennt sind, werden die Krümmer erfindungsgemäß miteinander verbunden. Hierzu wird mindestens ein Verbindungskanal vorgesehen, der nicht verschließbar, d. h. dauerhaft geöffnet ist und als Überströmkanal fungiert.

Dieser Verbindungskanal läßt auch bei geringen Abgasmengen einen Teil des Abgases vom zweiten Abgaskrümmer in den ersten Abgaskrümmer überströmen, so dass die zuschaltbare Turbine via zweitem Abgaskrümmer und Verbindungskanal auch im deaktivierten, d. h. abgeschalteten Zustand mit Abgas beaufschlagt wird.

Dabei soll der zuschaltbaren Turbine via Verbindungskanal lediglich so viel Abgas zugeführt werden, dass die Turbinenwelle eine Mindestdrehzahl *n_{T}* nicht unterschreitet. Das Aufrechthalten einer gewissen Mindestdrehzahl verhindert bzw. vermindert den Abbau des hydrodynamischen Schmierfilms in der Gleitlagerung der Welle des ersten Laders. Folglich wirkt sich die Maßnahme, der zuschaltbaren Turbine auch im deaktivierten Zustand eine geringe Abgasmenge zu zuführen, vorteilhaft hinsichtlich des Verschleißes und der Dauerhaltbarkeit des Abgasturboladers aus. Zudem verbessert sich das Ansprechverhalten der zuschaltbaren Turbine bzw. der Aufladung insgesamt, denn die zuschaltbare Turbine wird bei Aktivierung ausgehend von einer höheren Drehzahl beschleunigt. Einem vom Fahrer angeforderten Drehmoment kann vergleichsweise schnell, d. h. mit nur geringer Verzögerung entsprochen werden.

Die Abgasleitungen der mindestens zwei Zylinder führen innerhalb des Zylinderkopfes zu den zwei Gesamtabgasleitungen zusammenführen. Wie bereits ausgeführt, ist man im Rahmen der konstruktiven Auslegung der Abgasturboaufladung bemüht, die Turbinen möglichst nahe am Auslass der Brennkraftmaschine anzuordnen, d.h. die Länge und das Volumen des Leitungssystems stromaufwärts der Turbinen zu minimieren. Die weitgehende Integration der Abgaskrümmer in den Zylinderkopf bzw. das Zusammenführen der Abgasleitungen zu Gesamtabgasleitungen innerhalb des Zylinderkopfes ist dabei eine zielführende Maßnahme.

Ein derartiger Zylinderkopf zeichnet sich durch eine kompakte Bauweise aus, wobei die Gesamtwegstrecke der Abgasleitungen des Abgaskrümmers und das Volumen der Abgasleitungen stromaufwärts der Turbine reduziert werden. Die Verwendung eines derartigen Zylinderkopfes führt zudem zu einer geringeren Anzahl an Bauteilen und folglich zu einer Verringerung der Kosten, insbesondere der Montage- und Bereitstellungskosten. Die kompakte Bauweise ermöglicht ein dichtes Packaging der Antriebseinheit im Motorraum.

Eine Gesamtabgasleitung ist auf der Seite der anderen Gesamtabgasleitung angeordnet, die der Montage-Stirnseite abgewandt ist. Die Gesamtabgasleitungen liegen gewissermaßen - in Richtung der Zylinderlängsachse - übereinander, gegebenenfalls versetzt zueinander angeordnet.

Diese Ausführung ist besonders geeignet für den Einsatz, d.h. die Verwendung eines Verbindungsstücks der unten genannten Art, da die beiden Gesamtabgasleitungen nahe beieinander aus dem Zylinderkopf austreten, was eine kompakte und damit kleinvolumige und leichte Ausbildung des Verbindungsstücks gestattet.

Damit wird die erste der Erfindung zugrunde liegende Aufgabe gelöst, nämlich eine aufgeladene Brennkraftmaschine bereitzustellen, mit der die aus dem Stand der Technik bekannten Probleme bzw. Nachteile überwunden werden und die ein verbessertes Betriebsverhalten bei Aktivierung der zuschaltbaren Turbine aufweist.

Eine erfindungsgemäße Brennkraftmaschine kann auch zwei Zylinderköpfe aufweisen, beispielweise, wenn die Zylinder auf zwei Zylinderbänke verteilt angeordnet sind.

Der mindestens eine Verbindungskanal soll lediglich eine geringe Abgasmenge zur Verfügung stellen, um eine Mindestdrehzahl *n_{T}* der Welle zu gewährleisten, und ist geometrisch entsprechend zu dimensionieren. Es ist nicht die Aufgabe der zuschaltbaren Turbine im deaktivierten Zustand am Aufbau des Ladedrucks mitzuwirken. Die hierzu erforderliche Abgasmenge bereitzustellen, ist nicht die Aufgabe des Verbindungskanals, sondern vielmehr - bei geöffneten bzw. zugeschalteten Auslaßöffnungen - die des ersten Abgaskrümmers.

Vorteilhaft sind daher Ausführungsformen, bei denen der mindestens eine nicht verschließbare Verbindungskanal eine Drosselstelle darstellt, die eine Druckabsenkung in der durch den Verbindungskanal hindurchtretenden Abgasströmung hervorruft. Auf diese Weise wird sichergestellt, dass nur eine geringe Abgasmenge den Verbindungskanal passiert, nämlich gerade so viel Abgas, wie es erforderlich ist, um eine gewisse Mindestdrehzahl der Turbinenwelle aufrecht zu erhalten.

Der mindestens eine Verbindungskanal ist entsprechend seiner Funktion zu dimensionieren, d. h. kleiner auszuführen als beispielsweise die sich an eine Auslaßöffnung anschließende Abgasleitung, welche der möglichst verlustfreien Versorgung der Turbine mit ausreichend Abgas dient.

Vorteilhaft sind daher Ausführungsformen der aufgeladenen Brennkraftmaschine, bei denen der kleinste Querschnitt A_{Quer},_{V} des mindestens einen Verbindungskanals kleiner ist als der kleinste Querschnitt A_{Quer,Ex} einer Abgasleitung. Der Strömungsquerschnitt einer Leitung bzw. eines Kanals ist der Parameter, der maßgeblichen Einfluss auf den Durchsatz hat, d. h. auf die pro Zeiteinheit durch den Verbindungskanal hindurchgeführte Abgasmenge. Zu Vergleichszwecken wird erfindungsgemäß Bezug genommen auf den Strömungsquerschnitt, welcher senkrecht zum mittleren Stromfaden steht.

Vorteilhaft sind Ausführungsformen der aufgeladenen Brennkraftmaschine, bei denen gilt: A_{Quer,V} ≤ 0.3 A_{Quer,Ex}.

Vorteilhaft sind insbesondere Ausführungsformen der aufgeladenen Brennkraftmaschine, bei denen gilt: A_{Quer,V} ≤ 0.2 A_{Quer,Ex}, vorzugsweise A_{Quer,V} ≤ 0.1 A_{Quer,Ex} bzw. A_{Quer,V} ≤ 0.05 A_{Quer,Ex}.

Vorteilhaft sind Ausführungsformen der aufgeladenen Brennkraftmaschine, bei denen der mindestens eine nicht verschließbare Verbindungskanal von einer Abgasleitung des zweiten Abgaskrümmers abzweigt und diese Abgasleitung des zweiten Abgaskrümmers beispielsweise mit einer Abgasleitung des ersten Abgaskrümmers verbindet oder aber mit der Gesamtabgasleitung des ersten Abgaskrümmers.

Davon sind auch Ausführungsformen umfaßt, bei denen der mindestens eine nicht verschließbare Verbindungskanal die Abgasleitung einer zuschaltbaren Auslaßöffnung eines Zylinders mit der Abgasleitung einer dauerhaft aktivierten Auslaßöffnung eines anderen Zylinders verbindet.

Korrespondierend zu der erfindungsgemäßen Zielsetzung, nur geringe Abgasmengen via Verbindungskanal in den ersten Krümmer überführen, d. h. einspeisen zu wollen, ist theoretisch die Versorgung des Verbindungskanals mit Abgas über die Abgasleitung einer einzelnen Auslaßöffnung ausreichend, wobei aufgrund des Umstandes, dass im gesamten Abgassystem des zweiten Krümmers nahezu derselbe Abgasdruck herrscht, auch Abgas aus anderen Abgasleitungen des zweiten Krümmer infolge eines Rückströmens in den Verbindungskanal gelangen kann bzw. gelangt. Nichtsdestotrotz unterstützt die in Rede stehende Ausführungsform die eigentliche Zielsetzung einer geringen Abgasabführung via Verbindungskanal.

In Abhängigkeit von der Stelle, an welcher der Verbindungskanal vom zweiten Krümmer abzweigt, wäre ein mehr oder weniger stark ausgeprägtes Rückströmen der aus den anderen Auslaßöffnungen abgeführten Abgasanteile erforderlich.

Da der Verbindungskanal im Wesentlichen nur mit dem Abgas einer einzelnen Auslaßöffnung beaufschlagt wird, kann eine Pulsation im via Verbindungskanal überführten Abgasstrom auftreten. Dies würde den nachteiligen Effekt mit sich bringen, dass die zuschaltbare Turbine im deaktivierten Zustand mit einer pulsierenden Abgasströmung beaufschlagt wird.

Werden die Abgasleitungen von dauerhaft aktivierten Auslaßöffnungen zu Teilabgasleitungen zusammengeführt, bevor diese Teilabgasleitungen zur Gesamtabgasleitung zusammenführen, können Ausführungsformen vorteilhaft sein, bei denen der mindestens eine nicht verschließbare Verbindungskanal von einer derartigen Teilabgasleitung des zweiten Abgaskrümmers abzweigt.

Vorteilhaft sind auch Ausführungsformen der aufgeladenen Brennkraftmaschine, bei denen der mindestens eine nicht verschließbare Verbindungskanal von der Gesamtabgasleitung des zweiten Abgaskrümmers abzweigt. Ausführungsformen mit einem von der Gesamtabgasleitung abzweigenden Verbindungskanal sind weniger anfällig hinsichtlich einer Pulsation im via Verbindungskanal überführten Abgasstrom.

Vorteilhaft sind dabei Ausführungsformen der aufgeladenen Brennkraftmaschine, bei denen der mindestens eine nicht verschließbare Verbindungskanal die beiden Gesamtabgasleitungen miteinander verbindet. Dadurch wird vermieden, dass der via Verbindungskanal überführte Abgasstrom erneut vergleichsweise enge und gegebenenfalls mehrfach gekrümmte Abgasleitungen einzelner Auslaßöffnungen durchströmen muß, was zu einem zusätzlichen Druckverlust führen würde.

Bei einer benachbarten Anordnung der beiden Gesamtabgasleitungen zueinander, verkürzt diese Ausführungsform zudem die Länge des Verbindungskanals erheblich.

Erfindungsgemäß müssen nicht die Abgasleitungen sämtlicher Zylinder eines Zylinderkopfes zu zwei Gesamtabgasleitungen zusammengeführt werden, sondern nur die Abgasleitungen von mindestens zwei Zylindern in der beschriebenen Weise gruppiert sein.

Vorteilhaft sind aber insbesondere Ausführungsformen, bei denen die Abgasleitungen sämtlicher Zylinder des mindestens einen Zylinderkopfes zu zwei Gesamtabgasleitungen zusammenführen.

Vorteilhaft sind Ausführungsformen der aufgeladenen Brennkraftmaschine, bei denen der mindestens eine Zylinderkopf mit den Turbinen der mindestens zwei Abgasturbolader via Verbindungsstück verbunden ist. Das Verbindungsstück wird einerseits mit dem Zylinderkopf und andererseits mit den Turbinen verbunden, kraftschlüssig, formschlüssig und/oder stoffschlüssig. Es dient der Überführung der Abgase vom Zylinderkopf in die Turbinen, d. h. dem Einleiten des Abgases in den Eintrittsbereich der Turbinen, wozu die Abgasströmungen in der Regel auch umzulenken sind. Vorteilhaft sind Ausführungsformen, bei denen das Verbindungsstück ein Gussteil ist.

Vorteilhaft sind dabei Ausführungsformen der aufgeladenen Brennkraftmaschine, bei denen der mindestens eine nicht verschließbare Verbindungskanal in das Verbindungsstück integriert ist.

Vorteilhaft können aber auch Ausführungsformen der aufgeladenen Brennkraftmaschine sein, bei denen der mindestens eine nicht verschließbare Verbindungskanal in den Zylinderkopf integriert ist.

Die Integration des Verbindungskanals in ein anders Bauteil, beispielsweise den Zylinderkopf bzw. das Verbindungsstück, reduziert die Anzahl an Bauteilen und ist auch hinsichtlich der Vermeidung einer Leckage eine bevorzugte Ausführungsform. Gegenüber Ausführungsformen mit externem Kanal werden Befestigungsmittel und zusätzliche Dichtelemente entbehrlich.

Vorteilhaft sind Ausführungsformen der aufgeladenen Brennkraftmaschine, bei denen der mindestens eine Verbindungskanal an der Stelle, an der dieser in den ersten Abgaskrümmer mündet, in Richtung zuschaltbarer Turbine ausgerichtet ist, so dass die aus dem Verbindungskanal austretende Abgasströmung unter Vermeidung großer Umlenkung direkt auf das Turbinentaufrad trifft.

Vorteilhaft sind Ausführungsformen der aufgeladenen Brennkraftmaschine, die zur Betätigung der Auslaßöffnungen mit einem zumindest teilweise variablen Ventiltrieb, vorzugsweise mit einem voll variablen Ventiltrieb ausgestattet sind.

Vorteilhaft sind Ausführungsformen der aufgeladenen Brennkraftmaschine, bei denen der eine Abgasturbolader seitlich und benachbart zum Zylinderkopf und der andere Abgasturbolader seitlich und benachbart zum Zylinderblock angeordnet ist. Diese Konfiguration sorgt für eine motornahe Anordnung beider Turbinen, in Richtung Zylinderlängsachse übereinander, und ein dichtes Packaging der gesamten Antriebseinheit.

Vorteilhaft sind Ausführungsformen der aufgeladenen Brennkraftmaschine, bei denen der mindestens eine Zylinderkopf mit einem integrierten Kühlmittelmantel ausgestattet ist. Aufgeladene Brennkraftmaschinen sind thermisch höher belastet als Saugmotoren, weshalb höhere Anforderungen an die Kühlung zu stellen sind.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine bzw. des Zylinderkopfes mit einem integrierten Kühlmittelmantel, d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und dem Kühlmittel in einem Wärmetauscher wieder entzogen.

Die eingesetzten Turbinen können mit einer variablen Turbinengeometrie ausgestattet sein, die durch Verstellen an den jeweiligen Betriebspunkt der Brennkraftmaschine angepaßt werden.

Insbesondere die zweite Turbine kann auch als Waste-Gate-Turbine ausgeführt werden, bei der Abgas via Bypaßleitung an der Turbine vorbeigeführt wird, sobald der Abgasmassenstrom eine kritische Größe überschreitet. Hierzu ist ein Absperrelement in der Bypaßleitung vorzusehen.

Die Bypaßleitung kann stromabwärts der Turbinen in eine der beiden Gesamtabgasleitungen münden oder gemäß einer bevorzugten Ausführungsform auch in den ersten Abgaskrümmer stromaufwärts der ersten Turbine.

Bei Ausführungsformen der letztgenannten Art kann die Bypaßleitung dann in vorteilhafter Weise dazu genutzt werden, die erste zuschaltbare Turbine kurz vor Aktivierung durch Öffnen der Bypaßleitung zu beschleunigen.

Die zweite der Erfindung zugrunde liegende Teilaufgabe, nämlich ein Verfahren zum Betreiben einer Brennkraftmaschine gemäß einer zuvor beschriebenen Art aufzuzeigen, wird gelöst durch ein Verfahren, bei dem die bei einer geringen Abgasmenge deaktivierten zuschaltbaren Auslaßöffnungen aktiviert werden, sobald die Abgasmenge eine vorgebbare Abgasmenge übersteigt.

Das im Zusammenhang mit der erfindungsgemäßen Brennkraftmaschine Gesagte gilt ebenfalls für das erfindungsgemäße Verfahren. Das Aktivieren der Auslaßöffnungen ist gleichbedeutend mit dem Zuschalten der ersten Turbine. Ein vorheriges Beschleunigen der zuschaltbaren Turbine via Bypaßleitung einer als Waste-Gate-Turbine ausgeführten zweiten Turbine bleibt davon unberührt.

Bei einer nicht aufgeladenen Brennkraftmaschine korrespondiert die Abgasmenge näherungsweise mit der Drehzahl und/oder der Last der Brennkraftmaschine und zwar abhängig von der im Einzelfall verwendeten Laststeuerung. Bei einem traditionellen Ottomotor mit Quantitätsregelung steigt die Abgasmenge auch bei konstanter Drehzahl mit zunehmender Last an, wohingegen die Abgasmenge bei traditionellen Dieselmotoren mit Qualitätsregelung lediglich drehzahlabhängig ist, weil bei Laständerung und konstanter Drehzahl die Gemischzusammensetzung, nicht jedoch die Gemischmenge variiert.

Liegt der erfindungsgemäßen Brennkraftmaschine eine Quantitätsregelung zugrunde, bei der die Last über die Menge an Frischgemisch gesteuert wird, kann die Abgasmenge die relevante, d. h. vorgebbare, Abgasmenge auch bei konstanter Drehzahl übersteigen, wenn die Last der Brennkraftmaschine eine vorgebbare Last übersteigt, da die Abgasmenge mit der Last korreliert, wobei die Abgasmenge mit zunehmender Last steigt und mit abnehmender Last sinkt.

Liegt der Brennkraftmaschine hingegen eine Qualitätsregelung zugrunde, bei der die Last über die Zusammensetzung des Frischgemischs gesteuert wird und sich die Abgasmenge nahezu ausschließlich mit der Drehzahl ändert, d. h. proportional zur Drehzahl ist, übersteigt die Abgasmenge unabhängig von der Last die vorgebbare Abgasmenge, wenn die Drehzahl der Brennkraftmaschine eine vorgebbare Drehzahl übersteigt.

Die erfindungsgemäße Brennkraftmaschine ist eine aufgeladene Brennkraftmaschine, so dass zusätzlich der Ladedruck auf der Ansaugseite zu berücksichtigen ist, der sich mit der Last und/oder der Drehzahl ändern kann und Einfluß auf die Abgasmenge hat. Die vorstehend dargelegten Zusammenhänge betreffend die Abgasmenge und die Last bzw. Drehzahl gelten folglich in dieser allgemeinen Form nur bedingt. Daher stellt das erfindungsgemäße Verfahren ganz allgemein auf die Abgasmenge ab und nicht auf die Last bzw. Drehzahl.

Wenn die Abgasmenge die vorgebbare Abgasmenge wieder unterschreitet, werden die zuschaltbaren Auslaßöffnungen erneut deaktiviert und mit diesen die zuschaltbare Turbine.

Vorteilhaft sind Verfahrensvarianten, bei denen die zuschaltbaren Auslaßöffnungen aktiviert werden, sobald die Abgasmenge eine vorgebbare Abgasmenge übersteigt und für eine vorgebbare Zeitspanne *Δt₁* größer ist als diese vorgegebene Abgasmenge.

Die Einführung einer zusätzlichen Bedingung für das Zuschalten der ersten Turbine soll ein zu häufiges Umschalten verhindern, insbesondere ein Aktivieren der zuschaltbaren Auslaßöffnungen, wenn die Abgasmenge nur kurzzeitig die vorgegebene Abgasmenge überschreitet und dann wieder fällt bzw. um den vorgegebenen Wert für die Abgasmenge schwankt, ohne dass das Überschreiten ein Zuschalten der ersten Turbine rechtfertigen würde.

Aus den zuvor genannten Gründen sind auch Verfahrensvarianten vorteilhaft, bei denen die zuschaltbaren Auslaßöffnungen deaktiviert werden, sobald die Abgasmenge eine vorgebbare Abgasmenge unterschreitet und für eine vorgebbare Zeitspanne *Δt₂* kleiner ist als diese vorgegebene Abgasmenge.

Ist die zweite Turbine eine Waste-Gate-Turbine, deren Bypaßleitung stromaufwärts der ersten Turbine in den ersten Abgaskrümmer mündet, sind Ausführungsformen des Verfahrens vorteilhaft, bei denen die erste zuschaltbare Turbine kurz vor Aktivierung durch Öffnen eines in der Bypaßleitung angeordneten Absperrelementes beschleunigt wird.

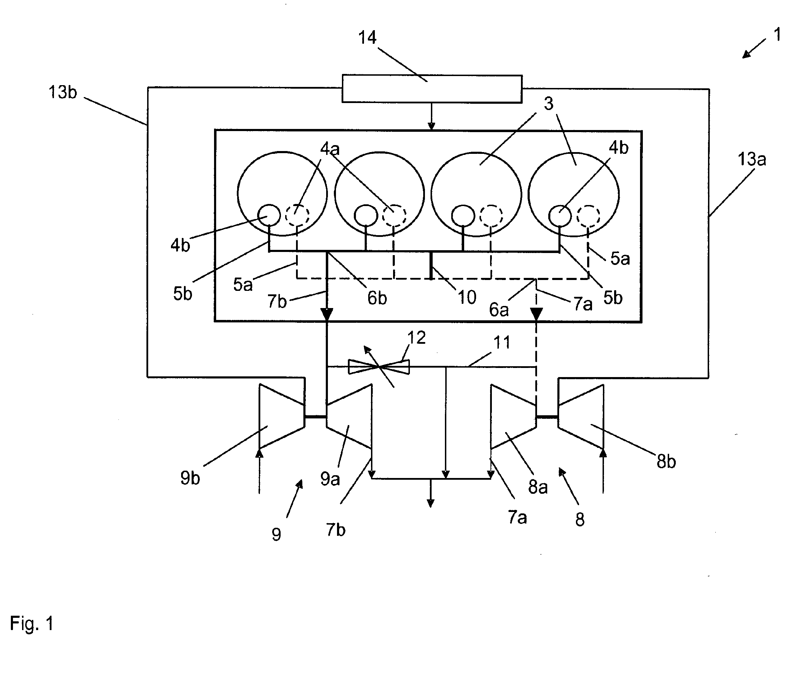

Im Folgenden wird die Erfindung anhand eines Ausführungsbeispiels gemäß Figur 1 näher beschrieben. Hierbei zeigt:
- Fig. 1: schematisch eine erste Ausführungsform der Brennkraftmaschine.

Figur 1 zeigt schematisch eine erste Ausführungsform der Brennkraftmaschine 1, die mit zwei Abgasturboladern 8, 9 ausgestattet ist. Jeder Abgasturbolader 8, 9 umfaßt eine Turbine 8a, 9a und einen Verdichter 8b, 9b. Das heiße Abgas entspannt sich in den Turbinen 8a, 9a unter Energieabgabe und die Verdichter 8b, 9b komprimieren die Ladeluft, die via Ansaugleitungen 13a, 13b und Plenum 14 den Zylindern 3 zugeführt wird, wodurch eine Aufladung der Brennkraftmaschine 1 erreicht wird.

Bei der in Figur 1 dargestellten Brennkraftmaschine 1 handelt es sich um einen Vier-Zylinder-Reihenmotor, bei dem die Zylinder 3 entlang der Längsachse des Zylinderkopfes 2, d. h. in Reihe, angeordnet sind. Jeder Zylinder 3 weist zwei Auslaßöffnungen 4a, 4b auf, wobei sich an jede Auslaßöffnung 4a, 4b eine Abgasleitung 5a, 5b zum Abführen der Abgase aus dem Zylinder 3 anschließt.

Jeweils eine Auslaßöffnung 4a jedes Zylinders 3 ist als zuschaltbare Auslaßöffnung 4a ausgebildet, die im Rahmen des Ladungswechsels nur dann geöffnet wird, wenn die Abgasmenge eine vorgegebene Abgasmenge übersteigt. Dadurch wird die stromabwärts angeordnete erste Turbine 8a aktiviert, d. h. mit Abgas beaufschlagt. Die Abgasleitungen 5a der zuschaltbaren Auslaßöffnungen 4a sämtlicher Zylinder 3 führen unter Ausbildung eines ersten Abgaskrümmers 6a zu einer ersten Gesamtabgasleitung 7a zusammen, welche mit der Turbine 8a des ersten Abgasturboladers 8 verbunden ist (gestrichelt gezeichnete Linien).

Die Abgasleitungen 5b der anderen Auslaßöffnungen 4b sämtlicher Zylinder 3 führen unter Ausbildung eines zweiten Abgaskrümmers 6b zu einer zweiten Gesamtabgasleitung 7b zusammen, welche mit der Turbine 9a des zweiten Abgasturboladers 9 verbunden ist (durchgezogene Linien).

Vorliegend führen die Abgasleitungen 5a, 5b innerhalb des Zylinderkopfes 2 zu Gesamtabgasleitungen 7a, 7b zusammen. Wie aus Figur 1 ersichtlich, sind der erste Abgaskrümmer 6a und der zweite Abgaskrümmer 6b stromaufwärts der beiden Turbinen 8a, 9a via einen nicht verschließbaren Verbindungskanal 10 dauerhaft miteinander verbunden.

Der Verbindungskanal 10 fungiert als Überströmkanal, über den Abgas von dem zweiten Abgaskrümmer 6b in den ersten Abgaskrümmer 6a strömt. Damit wird sichergestellt, dass die zuschaltbare Turbine 8a auch im deaktivierten Zustand, d. h. bei geschlossenen zuschaltbaren Auslaßöffnungen 4a, mit Abgas beaufschlagt wird. Das Aufrechthalten einer gewissen Mindestdrehzahl verhindert bzw. vermindert den Abbau des hydrodynamischen Schmierfilms in der Gleitlagerung des ersten Laders 8 und verkürzt den Beschleunigungsvorgang der zuschaltbaren Turbine 8a bei Aktivierung, d. h. beim Öffnen der zuschaltbaren Auslaßöffnungen 4a.

Die zweite Turbine 9a ist gemäß Figur 1 als Waste-Gate-Turbine ausgeführt, deren Bypaßleitung 11 stromaufwärts aus der zweiten Gesamtabgasleitung 7b abzweigt, sich gabelt und stromaufwärts der zuschaltbaren Turbine 8a auch in den ersten Abgaskrümmer 6a mündet. Durch Öffnen eines in der Bypaßleitung 11 angeordneten Absperrelementes 12 kann die zuschaltbare Turbine 8a kurz vor ihrer Aktivierung weiter beschleunigt werden.

### Bezugszeichen

- 1: aufgeladene Brennkraftmaschine
- 2: Zylinderkopf
- 3: Zylinder
- 4a: zuschaltbare Auslaßöffnung
- 4b: Auslaßöffnung
- 5a: Abgasleitung
- 5b: Abgasleitung
- 6a: erster Abgaskrümmer
- 6b: zweiter Abgaskrümmer
- 7a: erste Gesamtabgasleitung
- 7b: zweite Gesamtabgasleitung
- 8: erster Abgasturbolader
- 8a: erste Turbine, zuschaltbare Turbine
- 8b: erster Verdichter
- 9: zweiter Abgasturbolader
- 9a: zweite Turbine
- 9b: zweiter Verdichter
- 10: Verbindungskanal
- 11: Bypaßleitung
- 12: Absperrelement
- 13a: erste Ansaugleitung
- 13b: zweite Ansaugleitung
- 14: Plenum

- A_{Quer,V}: kleinster Querschnitt des Verbindungskanals
- A_{Quer,Ex}: kleinster Querschnitt einer Abgasleitung
- n_{T}: Drehzahl der Welle des ersten Abgasturboladers

## Patentansprüche

1. Aufgeladene Brennkraftmaschine (1) mit mindestens zwei Abgasturboladern (8, 9) und mindestens einem an einer Montage-Stirnseite mit einem Zylinderblock verbindbaren Zylinderkopf (2) mit mindestens zwei Zylindern (3), wobei jeder Zylinder (3) mindestens zwei Auslaßöffnungen (4a, 4b) zum Abführen der Abgase aufweist, von denen mindestens eine als zuschaltbare Auslaßöffnung (4a) ausgebildet ist, und sich an jede Auslaßöffnung (4a, 4b) eine Abgasleitung (5a, 5b) anschließt, bei der
- die Abgasleitungen (5a) der zuschaltbaren Auslaßöffnungen (4a) von mindestens zwei Zylindern (3) unter Ausbildung eines ersten Abgaskrümmers (6a) zu einer ersten Gesamtabgasleitung (7a) zusammenführen, welche mit der Turbine (8a) eines ersten Abgasturboladers (8) verbunden ist, und
- die Abgasleitungen (5b) der anderen Auslaßöffnungen (4b) der mindestens zwei Zylinder (3) unter Ausbildung eines zweiten Abgaskrümmers (6b) zu einer zweiten Gesamtabgasleitung (7b) zusammenführen, welche mit der Turbine (9a) eines zweiten Abgasturboladers (9) verbunden ist,
**dadurch gekennzeichnet, dass**
- der erste Abgaskrümmer (6a) und der zweite Abgaskrümmer (6b) stromaufwärts der beiden Turbinen (8a, 9a) via mindestens einen nicht verschließbaren Verbindungskanal (10) dauerhaft miteinander verbunden sind, und
- die Abgasleitungen (5a, 5b) der mindestens zwei Zylinder (3) innerhalb des Zylinderkopfes (2) zu den zwei Gesamtabgasleitungen (7a, 7b) zusammenführen, wobei die eine Gesamtabgasleitung (7a, 7b) auf der der Montage-Stirnseite abgewandten Seite der anderen Gesamtabgasleitung (7a, 7b) angeordnet ist.

2. Aufgeladene Brennkraftmaschine (1) nach Anspruch 1, **dadurch gekennzeichnet, dass** der mindestens eine nicht verschließbare Verbindungskanal (10) eine Drosselstelle darstellt, die zu einer Druckabsenkung in der durch den Verbindungskanal (10) hindurchtretenden Abgasströmung führt.

3. Aufgeladene Brennkraftmaschine (1) nach Anspruch 1 oder 2, **dadurch gekennzeichnet, dass** der kleinste Querschnitt A_{Quer,V} des mindestens einen Verbindungskanals (10) kleiner ist als der kleinste Querschnitt A_{Quer,Ex} einer Abgasleitung (5a, 5b).

4. Aufgeladene Brennkraftmaschine (1) nach Anspruch 3, **dadurch gekennzeichnet, dass** gilt: A_{Quer.V} ≤ 0.2 A_{Quer,Ex}.

5. Aufgeladene Brennkraftmaschine (1) nach Anspruch 3, **dadurch gekennzeichnet, dass** gilt: A_{Quer,V} ≤ 0.1 A_{Quer,Ex}.

6. Aufgeladene Brennkraftmaschine (1) nach Anspruch 3, **dadurch gekennzeichnet, dass** gilt: A_{Quer,V} ≤ 0.05 A_{Quer,Ex}.

7. Aufgeladene Brennkraftmaschine (1) nach einem der vorherigen Ansprüche, **dadurch gekennzeichnet, dass** der mindestens eine nicht verschließbare Verbindungskanal (10) von einer Abgasleitung (5b) des zweiten Abgaskrümmers (6b) abzweigt.

8. Aufgeladene Brennkraftmaschine (1) nach einem der Ansprüche 1 bis 6, **dadurch gekennzeichnet, dass** der mindestens eine nicht verschließbare Verbindungskanal (10) von der Gesamtabgasleitung (7b) des zweiten Abgaskrümmers (6b) abzweigt.

9. Aufgeladene Brennkraftmaschine (1) nach einem der vorherigen Ansprüche, **dadurch gekennzeichnet, dass** der mindestens eine Zylinderkopf (2) mit den Turbinen (8a, 9a) der zwei Abgasturbolader (8, 9) via Verbindungsstück verbunden ist.

10. Aufgeladene Brennkraftmaschine (1) nach Anspruch 9, **dadurch gekennzeichnet, dass** der mindestens eine nicht verschließbare Verbindungskanal (10) in das Verbindungsstück integriert ist.

11. Aufgeladene Brennkraftmaschine (1) nach einem der Ansprüche 1 bis 9, **dadurch gekennzeichnet, dass** der mindestens eine nicht verschließbare Verbindungskanal (10) in den Zylinderkopf (2) integriert ist.

12. Aufgeladene Brennkraftmaschine (1) nach Anspruch 1, **dadurch gekennzeichnet, dass** der eine Abgasturbolader (8, 9) seitlich und benachbart zum Zylinderkopf (2) und der andere Abgasturbolader (8, 9) seitlich und benachbart zum Zylinderblock angeordnet ist.

13. Verfahren zum Betreiben einer aufgeladenen Brennkraftmaschine (1) nach einem der vorherigen Ansprüche, **dadurch gekennzeichnet, dass** die bei einer geringen Abgasmenge deaktivierten zuschaltbaren Auslaßöffnungen (4a) aktiviert werden, sobald die Abgasmenge eine vorgebbare Abgasmenge übersteigt.

## Claims

1. Supercharged internal combustion engine (1) having at least two exhaust-gas turbochargers (8, 9) and having at least one cylinder head (2) which can be connected at an assembly end side to a cylinder block and which has at least two cylinders (3), wherein each cylinder (3) has at least two outlet openings (4a, 4b) for discharging the exhaust gases, at least one of which outlet openings is designed as an activatable outlet opening (4a), and each outlet opening (4a, 4b) is adjoined by an exhaust line (5a, 5b), in which
- the exhaust lines (5a) of the activatable outlet openings (4a) of at least two cylinders (3) merge, with the formation of a first exhaust manifold (6a), to form a first overall exhaust line (7a) which is connected to the turbine (8a) of a first exhaust-gas turbocharger (8), and
- the exhaust lines (5b) of the other outlet openings (4b) of the at least two cylinders (3) merge, with the formation of a second exhaust manifold (6b), to form a second overall exhaust line (7b) which is connected to the turbine (9a) of a second exhaust-gas turbocharger (9),
**characterized in that**
- the first exhaust manifold (6a) and the second exhaust manifold (6b) are permanently connected to one another upstream of the two turbines (8a, 9a) via at least one connecting duct (10) which cannot be closed off, and
- the exhaust lines (5a, 5b) of the at least two cylinders (3) merge to form the two overall exhaust lines (7a, 7b) within the cylinder head (2), wherein one overall exhaust line (7a, 7b) is arranged on that side of the other overall exhaust line (7a, 7b) which faces away from the assembly end side.

2. Supercharged internal combustion engine (1) according to Claim 1, **characterized in that** the at least one connecting duct (10) which cannot be closed off forms a throttle point which leads to a pressure reduction in the exhaust-gas flow passing through the connecting duct (10).

3. Supercharged internal combustion engine (1) according to Claim 1 or 2, **characterized in that** the smallest cross section A_{Cross,C} of the at least one connecting duct (10) is smaller than the smallest cross section A_{Cross,Ex} of an exhaust line (5a,5b).

4. Supercharged internal combustion engine (1) according to Claim 3, **characterized in that** the following relationship applies: A_{Cross,C} ≤ 0.2 A_{Cross,Ex}.

5. Supercharged internal combustion engine (1) according to Claim 3, **characterized in that** the following relationship applies: A_{Cross,C} ≤ 0.1 A_{Cross,Ex}.

6. Supercharged internal combustion engine (1) according to Claim 3, **characterized in that** the following relationship applies: A_{Cross,C} ≤ 0.05 A_{Cross,Ex}.

7. Supercharged internal combustion engine (1) according to one of the preceding claims, **characterized in that** the at least one connecting duct (10) which cannot be closed off branches off from an exhaust line (5b) of the second exhaust manifold (6b).

8. Supercharged internal combustion engine (1) according to one of Claims 1 to 6, **characterized in that** the at least one connecting duct (10) which cannot be closed off branches off from the overall exhaust line (7b) of the second exhaust manifold (6b).

9. Supercharged internal combustion engine (1) according to one of the preceding claims, **characterized in that** the at least one cylinder head (2) is connected to the turbines (8a, 9a) of the two exhaust-gas turbochargers (8, 9) via a connecting piece.

10. Supercharged internal combustion engine (1) according to Claim 9, **characterized in that** the at least one connecting duct (10) which cannot be closed off is integrated into the connecting piece.

11. Supercharged internal combustion engine (1) according to one of Claims 1 to 9, **characterized in that** the at least one connecting duct (10) which cannot be closed off is integrated into the cylinder head (2).

12. Supercharged internal combustion engine (1) according to Claim 1, **characterized in that** one exhaust-gas turbocharger (8, 9) is arranged laterally adjacent to the cylinder head (2) and the other exhaust-gas turbocharger (8, 9) is arranged laterally adjacent to the cylinder block.

13. Method for operating a supercharged internal combustion engine (1) according to one of the preceding claims, **characterized in that** the activatable outlet openings (4a), which are deactivated in the case of a low exhaust-gas quantity, are activated when the exhaust-gas quantity exceeds a predefinable exhaust-gas quantity.

## Revendications

1. Moteur à combustion interne à suralimentation (1) comprenant au moins deux turbocompresseurs à gaz d'échappement (8, 9) et au moins une culasse (2) pouvant être connectée au niveau d'un côté frontal de montage à un bloc-cylindres avec au moins deux cylindres (3), chaque cylindre (3) présentant au moins deux ouvertures de sortie (4a, 4b) pour l'évacuation des gaz d'échappement, dont au moins une est réalisée sous forme d'ouverture d'échappement commutable (4a), et une conduite de gaz d'échappement (5a, 5b) se raccordant à chaque ouverture d'échappement (4a, 4b),
- les conduites de gaz d'échappement (5a) des ouvertures d'échappement commutables (4a) d'au moins deux cylindres (3) se rejoignant en une première conduite de gaz d'échappement commune (7a) pour former un premier collecteur de gaz d'échappement (6a), laquelle conduite de gaz d'échappement commune est connectée à la turbine (8a) d'un premier turbocompresseur à gaz d'échappement (8), et
- les conduites de gaz d'échappement (5b) des autres ouvertures d'échappement (4b) des au moins deux cylindres (3) se rejoignant en une deuxième conduite de gaz d'échappement commune (7b) pour former un deuxième collecteur de gaz d'échappement (6b), laquelle conduite de gaz d'échappement commune est connectée à la turbine (9a) d'un deuxième turbocompresseur à gaz d'échappement (9),
**caractérisé en ce que**
- le premier collecteur de gaz d'échappement (6a) et le deuxième collecteur de gaz d'échappement (6b) sont connectés l'un à l'autre de manière durable en amont des deux turbines (8a, 9a) par le biais d'au moins un canal de connexion (10) ne pouvant pas être fermé, et
- les conduites de gaz d'échappement (5a, 5b) des au moins deux cylindres (3) se rejoignent à l'intérieur de la culasse (2) en les deux conduites de gaz d'échappement communes (7a, 7b), l'une des conduites de gaz d'échappement communes (7a, 7b) étant disposée du côté de l'autre conduite de gaz d'échappement commune (7a, 7b) opposé au côté frontal de montage.

2. Moteur à combustion interne à suralimentation (1) selon la revendication 1, **caractérisé en ce que** l'au moins un canal (10) de connexion ne pouvant pas être fermé constitue un point d'étranglement qui conduit à une diminution de pression dans le flux de gaz d'échappement traversant le canal de connexion (10).

3. Moteur à combustion interne à suralimentation (1) selon la revendication 1 ou 2, **caractérisé en ce que** la plus petite section transversale A_{Quer.V} de l'au moins un canal de connexion (10) est inférieure à la plus petite section transversale A_{Quer.Ex} d'une conduite de gaz d'échappement (5a, 5b).

4. Moteur à combustion interne à suralimentation (1) selon la revendication 3, **caractérisé en ce que** l'on a A_{Quer.V} ≤ 0,2 A_{Quer.Ex}.

5. Moteur à combustion interne à suralimentation (1) selon la revendication 3, **caractérisé en ce que** l'on a A_{Quer.V} ≤ 0,1 A_{Quer.Ex}.

6. Moteur à combustion interne à suralimentation (1) selon la revendication 3, **caractérisé en ce que** l'on a A_{Quer.V} ≤ 0,05 A_{Quer.Ex}.

7. Moteur à combustion interne à suralimentation (1) selon l'une quelconque des revendications précédentes, **caractérisé en ce que** l'au moins un canal de connexion (10) ne pouvant pas être fermé part d'une conduite de gaz d'échappement (5b) du deuxième collecteur de gaz d'échappement (6b).

8. Moteur à combustion interne à suralimentation (1) selon l'une quelconque des revendications 1 à 6, **caractérisé en ce que** l'au moins un canal de connexion (10) ne pouvant pas être fermé part de la conduite de gaz d'échappement commune (7b) du deuxième collecteur de gaz d'échappement (6b).

9. Moteur à combustion interne à suralimentation (1) selon l'une quelconque des revendications précédentes, **caractérisé en ce que** l'au moins une culasse (2) est connectée aux turbines (8a, 9a) des deux turbocompresseurs à gaz d'échappement (8, 9) par le biais d'un élément de connexion.

10. Moteur à combustion interne à suralimentation (1) selon la revendication 9, **caractérisé en ce que** l'au moins un canal de connexion (10) ne pouvant pas être fermé est intégré dans l'élément de connexion.

11. Moteur à combustion interne à suralimentation (1) selon l'une quelconque des revendications 1 à 9, **caractérisé en ce que** l'au moins un canal de connexion (10) ne pouvant pas être fermé est intégré dans la culasse (2).

12. Moteur à combustion interne à suralimentation (1) selon la revendication 1, **caractérisé en ce qu'**un turbocompresseur à gaz d'échappement (8, 9) est disposé latéralement et en position adjacente à la culasse (2) et l'autre turbocompresseur à gaz d'échappement (8, 9) est disposé latéralement et en position adjacente au bloc-cylindres.

13. Procédé pour faire fonctionner un moteur à combustion interne à suralimentation (1) selon l'une quelconque des revendications précédentes, **caractérisé en ce que** les ouvertures d'échappement (4a) pouvant être commutées, qui sont désactivées en cas d'une faible quantité de gaz d'échappement, sont activées dès que la quantité de gaz d'échappement dépasse une quantité de gaz d'échappement prédéfinissable.
